# EUROPEAN PATENT APPLICATION

(11) **EP 1 160 272 A1**
(43) Date of publication of application: **05.12.2001**
(21) Application number: 99972232.5
(22) Date of filing: 18.11.1999
(51) Int. Cl.: C08J 5/18, C08G 61/08, B32B 27/00, B29C 61/06, B29C 55/12

(54) **HEAT-SHRINKABLE FILM**

(30) Priority: 18.11.1998 JP 32797898
(71) Applicant: NIPPON ZEON CO., LTD., Chiyoda-ku Tokyo 100-8323 (JP)
(72) Inventor: ISHIMARU, Issei, Res. & Development Center, Kawasaki-shi, Kanagawa 210-0863 (JP); KONISHI, Yuichiro, Nippon Zeon Co., Ltd., Chiyoda-ku, Tokyo 100-8323 (JP)
(74) Representative: Albrecht, Thomas, Dr.
(86) International application number: JP9906429
(87) International publication number: WO0029469

(57) **Abstract**

A single-layer or multi-layer, heat-shrinkable film having a layer of a thermoplastic resin material comprising an alicyclic structure-containing polymer having a repeating unit (a) consisting of an alicyclic structure, wherein a proportion of a repeating unit (b) of a ring structure having no norbornane ring structure in the repeating unit (a) is at least 10% by weight. The film is excellent in heat shrinkability, mechanical strength (tensile strength, film impact) and moisture resistance.

## Description

### TECHNICAL FIELD

The present invention relates to a single-layer or multi-layer, heat-shrinkable film excellent in heat shrinkability, mechanical strength (tensile strength, film impact) and moisture resistance, and more particularly to a heat shrinkable film which is markedly prevented from being deteriorated in film impact and moisture resistance after heat shrinking. The heat-shrinkable films according to the present invention are suitable for use as packaging materials for heat shrink packaging in fields of food, drug and the like. The present invention also relates to a package obtained by thermally shrink-wrapping a product to be packaged with the heat-shrinkable film.

### BACKGROUND ART

In a field of packaging, single-layer or multi-layer, heat-shrinkable films formed of a thermoplastic resin such as polyvinyl chloride, polypropylene or polyethylene are widely used as packaging materials. The heat-shrinkable film is a film capable of tightly wrapping a product to be packaged by roughly wrapping the product once with the film and then subjecting the wrapped product to a heat treatment, for example, in a hot-air tunnel or with hot water to shrink the film utilizing shrinkage force generated in the film itself, and is used for a great number of foods in the industry of food in particular. The heat-shrinkable film is used in seal packaging for preventing a container from being opened or as a heat-shrinkable label material.

In recent years, in view of environmental problem, it has also been earnestly desired in the field of packaging to change packaging materials from halogen-containing resins, including vinyl chloride resins, that generate harmful gas upon incineration to other materials. Therefore, the packaging materials have been changed mainly to polyolefin materials such as the above-described polypropylene and polyethylene. However, in the fields of food and drug, as properties required of packaging materials, high heat resistance, moisture resistance, chemical resistance, transparency, mechanical strength, etc. are required from the influence of diversification of the kind, form, usage and the like of materials to be packaged. Therefore, the polyolefin materials have involved a problem that they cannot sufficiently cope with such requirements.

On the other hand, it has heretofore been known that alicyclic structure-containing polymers typified by thermoplastic norbornene resins are excellent in various properties such as heat resistance, transparency, moisture resistance and chemical resistance and hence suitable for use in the field of packaging for food and drug.

For example, Japanese Patent Application Laid-Open No. 165357/1996 discloses heat-shrinkable films obtained by biaxially stretching a cycloolefin resin. In this publication, addition polymers and ring-opening polymers of norbornene monomers, and hydrogenated products and graft-modified products thereof are widely exemplified as the cycloolefin resins. However, the cycloolefin resins specifically shown in this publication are only random copolymers of ethylene and tetracyclododecene(TCD). More specifically, in Examples of the publication are described only a heat-shrinkable film (Example 1) obtained by biaxially stretching an ethylene·TCD random copolymer, a heat-shrinkable film (Example 2) obtained by biaxially stretching a blend of an ethylene·TCD ransom copolymer and an ethylene·propylene random copolymer, and a heat-shrinkable film (Example 3) obtained by biaxially stretching a blend of an ethylene·TCD ransom copolymer and an ethylene·4-methylpentene-1 random copolymer.

These heat-shrinkable films specifically shown in the publication are excellent in heat shrinkability (shrink property), moisture resistance and mechanical strength and have such characteristics that the stiffness is high, and contents are easy to put in. However, the evaluation of such properties and characteristics is about the film before heat shrinking. According to the results of researches by the present inventors, it has been proven that the film impact and moisture resistance (water vapor permeability) of the heat-shrinkable films specifically shown in the publication are good before heat shrinking, but are markedly deteriorated after heat shrinking. In addition, these heat-shrinkable films are insufficient in tensile strength.

Japanese Patent Application Laid-Open No. 41178/1996 discloses sheets or films obtained by stretching hydrogenated products of ring-opening copolymers of dicyclopentadiene and tetracyclododecene. However, those specifically shown in this publication are sheets obtained by uniaxially stretching the hydrogenated products at a draw ratio of 1.20 times and having a thickness of 500 µm, and not heat-shrinkable films having sufficient heat shrinkability. This publication shows that the stretched sheets have neither defects such as voids and fish eye nor shape failure such as curling, torsion and surge and are high in light transmittance and low in water vapor transmission rate and gas transmission rate. However, the publication neither describes that the stretched sheets are excellent in heat shrinkability nor naturally suggests that the sheets are markedly deteriorated in moisture resistance and film impact after heat shrinking.

In a heat-shrinkable film, the properties after heat shrinking are more important than those before the heat shrinking, excluding heat shrinkability. For example, when mechanical strength such as film impact, or water vapor permeability is deteriorated after heat shrink packaging, various properties required of a packaging material cannot be sufficiently exhibited.

As described above, any heat-shrinkable film, which has excellent heat shrinkability and moreover high moisture resistance and excellent mechanical strength in addition to heat resistance, transparency and chemical resistance and is low in deterioration of such various properties even after heat shrinking, has heretofore been found.

### DISCLOSURE OF THE INVENTION

It is an object of the present invention to provide a single-layer or multi-layer, heat-shrinkable film having excellent heat shrinkability, mechanical strength (tensile strength, film impact) and moisture resistance.

Another object of the present invention is to provide a heat-shrinkable film markedly prevented from being deteriorated in film impact and moisture resistance after heat shrinking.

A further object of the present invention is to provide a heat-shrinkable film having such excellent various properties using an alicyclic structure-containing polymer having a repeating unit consisting of an alicyclic structure as a resin material.

A still further object of the present invention is to provide a package obtained by heat shrink packaging with the heat-shrinkable film having such excellent various properties.

The present inventors have carried out an extensive investigation with a view toward achieving the above-described objects. As a result, it has been found that when a stretched film is formed by using an alicyclic structure-containing polymer containing a repeating unit having a specific alicyclic structure in a certain proportion by itself or as a blend with another polymer, a heat-shrinkable film having excellent heat resistance, transparency, chemical resistance, moisture resistance, mechanical strength and heat shrinkability and moreover scarcely deteriorated in moisture resistance and film impact after heat shrinking compared with the respective initial values (values before heat shrinking) is provided. The present invention has been led to completion on the basis of such a finding.

According to the present invention, there is thus provided a single-layer or multi-layer, heat-shrinkable film having a layer of a thermoplastic resin material comprising an alicyclic structure-containing polymer (A) having a repeating unit (a) consisting of an alicyclic structure, wherein a proportion of a repeating unit (b) of a ring structure having no norbornane ring structure in the repeating unit (a) is at least 10% by weight.

In the heat-shrinkable film according to the present invention, the film impact retention after heat shrinking is at least 70%, and the rate of increase of water vapor transmission rate after heat shrinking is at most 1.20, and so the water vapor permeability and mechanical strength after heat shrinking are markedly improved compared with biaxially stretched films of cycloolefin resins known from the prior art.

According to the present invention, there is also provided a package obtained by thermally shrink-wrapping a product to be packaged with the heat-shrinkable film described above.

### BEST MODE FOR CARRYING OUT THE INVENTION

1. Alicyclic structure-containing polymer:
   The alicyclic structure-containing polymer used in the present invention is a resin having an alicyclic structure at its main chain and/or side chain. The alicyclic structure-containing resin preferably has the alicyclic structure at its main chain from the viewpoints of mechanical strength, heat resistance and the like.
   Examples of the alicyclic structure include a saturated cyclic hydrocarbon (cycloalkane) structure, an unsaturated cyclic hydrocarbon (cycloalkene) structure and the like. The cycloalkane structure and cycloalkene structure are preferred from the viewpoints of mechanical strength, heat resistance and the like, with the cycloalkane structure being most preferred.
   No particular limitation is imposed on the number of carbon atoms forming the alicyclic structure. However, it is generally 4 to 30 carbons, preferably 5 to 20 carbons, more preferably 5 to 15 carbons. When the number of carbon atoms forming the alicyclic structure falls within this range, properties such as mechanical strength, heat resistance and film-forming property are balanced with one another at a high level.
   A proportion of the repeating unit (a) having the alicyclic structure in the alicyclic structure-containing polymer used in the present invention may be suitably selected as necessary for the end application intended. However, it is generally at least 50% by weight, preferably at least 70% by weight, more preferably at least 90% by weight. It is preferred from the viewpoints of the transparency and heat resistance of the resulting film that the proportion of the repeating unit (a) having the alicyclic structure in the alicyclic structure-containing polymer falls within this range. No particular limitation is imposed on other repeating units than the repeating unit (a) having the alicyclic structure, and they may be suitably selected as necessary for the end application intended. As a specific example thereof, may be mentioned a repeating unit derived from a vinyl compound. The repeating units other than the repeating unit (a) are contained in a proportion of generally at most 50% by weight, preferably at most 30% by weight, more preferably at most 10% by weight based on the whole repeating unit of the alicyclic structure-containing polymer.
   The alicyclic structure-containing polymer used in the present invention require to have a repeating unit (a) consisting of an alicyclic structure and that a proportion of a repeating unit (b) of a ring structure having no norbornane ring structure in the repeating unit (a) is at least 10% by weight. The proportion of the repeating unit (b) of the ring structure having no norbornane ring structure in the repeating unit (a) is preferably at least 15% by weight, more preferably at least 30% by weight, and the upper limit thereof is 100% by weight. If the proportion of the repeating unit (b) of the ring structure having no norbornane ring structure in the repeating unit (a) is too low, the tensile strength of the resulting heat-shrinkable film is deteriorated, and more important, the film impact and moisture resistance of the heat-shrinkable film are markedly deteriorated after heat shrinking.
   As specific examples of the alicyclic structure-containing polymer, may be mentioned (1) norbornene polymers, (2) monocyclic cycloolefin polymers, (3) cyclic conjugated diene polymers, (4) vinyl alicyclic,hydrocarbon polymers, and (5) hydrogenated products thereof.
   Among these, the norbornene polymers, cyclic conjugated diene polymers and hydrogenated products thereof are preferred, with thermoplastic norbornene resins selected from the norbornene polymers and hydrogenated products thereof being more preferred from the viewpoint of heat resistance and mechanical strength.
   (1) Thermoplastic norbornene resin:
      No particular limitation is imposed on the thermoplastic norbornene resin used in the present invention, and it can be obtained with any publicly known norbornene monomer disclosed in, for example, Japanese Patent Application Laid-Open Nos. 14882/1991 and 122137/1991. More specifically, examples of the thermoplastic norbornene resin include ring-opening (co)polymers of norbornene monomer(s), addition copolymers of norbornene monomer(s) (particularly, addition copolymers of a norbornene monomer and a vinyl compound), and hydrogenated products thereof. Among these, the hydrogenated products of the ring-opening (co)polymers of the norbornene monomer(s) are particularly preferred from the viewpoint of various properties such as heat resistance, mechanical strength and moldability.
      Among these, the thermoplastic norbornene resin used in the present invention is such that the proportion of the repeating unit (b) of a ring structure having no norbornane ring structure in the repeating unit (a) consisting of the alicyclic structure is at least 10% by weight. The norbornane ring structure will hereinafter be described.
      Norbornane is a bicyclic bridged saturated cyclic hydrocarbon represented by the formula (1): 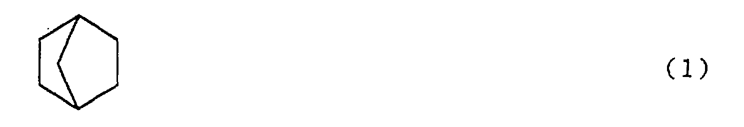 Such a ring structure is referred to as a norbornane ring structure.
      Norbornene is a bicyclic bridged unsaturated cyclic hydrocarbon (cycloolefin) represented by the formula (2): 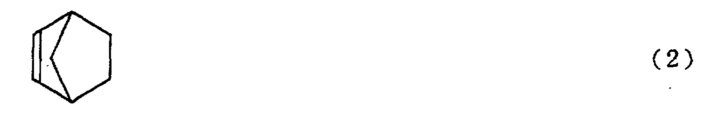 When the norbornene is subjected to ring-opening polymerization, a repeating unit represented by the formula (3): 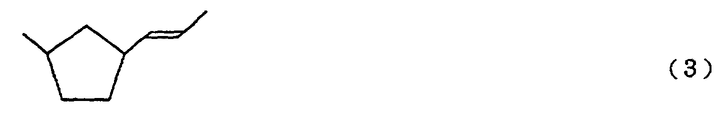 is formed, and the bridged cyclic structure is lost to form a carbon-carbon double bond at its main chain. When this double bond is hydrogenated, a saturated polymer is obtained. On the other hand, when the norbornene is subjected to addition polymerization, a repeating unit represented by the formula (4): 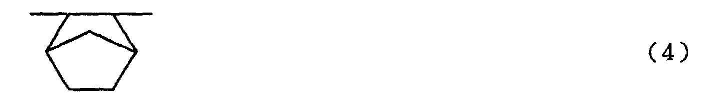 is formed, and the repeating unit comes to have a norbornane ring structure.
      Tetracyclododecene is a cycloolefin represented by the formula (5): 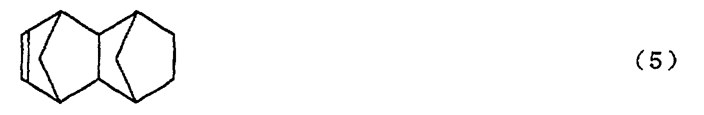 When the tetracyclododecene is subjected to ring-opening polymerization, a repeating unit represented by the formula (6): 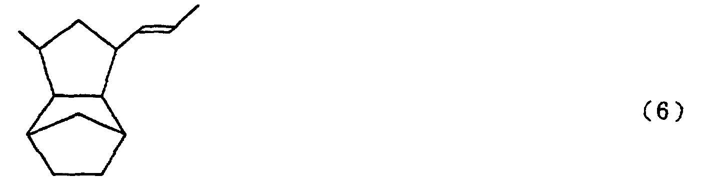 is formed. This repeating unit has one norbornane ring structure. When the tetracyclododecene is subjected to addition polymerization, a repeating unit represented by the formula (7): 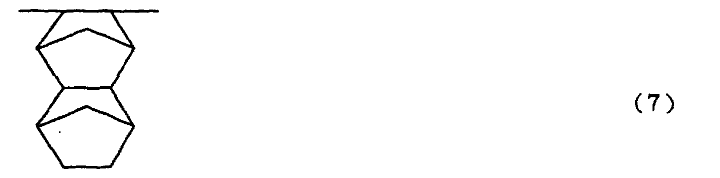 is formed. This repeating unit has two norbornane rings.
      As described above, the proportion of the repeating unit (b) of a ring structure having no norbornane ring structure or the proportion of the repeating unit of a ring structure having a norbornane ring structure in the repeating unit (a) consisting of the alicyclic structure is determined according to the kind(s) and copolymerization proportion of norbornene monomer(s) and a polymerization system.
      For example, a ring-opening polymer of a norbornene monomer having a norbornene ring as a bridged cyclic structure, and a hydrogenated product thereof have no norbornane ring structure in their repeating units. Accordingly, in a ring-opening copolymer and a hydrogenated product thereof, the proportion of the repeating unit (b) of a ring structure having no norbornane ring structure in the repeating unit (a) consisting of the alicyclic structure can be controlled by controlling the copolymerization proportion of the norbornene monomer having a norbornene ring as a bridged cyclic structure. In the case of an addition copolymer of the norbornene monomer, the proportion of the repeating unit (b) of a ring structure having no norbornane ring structure in the repeating unit (a) consisting of the alicyclic structure is controlled by, for example, controlling the copolymerization proportion of a cycloolefin or the like as a comonomer.
      Examples of the norbornene monomer having a norbornene ring structure as a bridged cyclic structure include norbornenes such as bicyclo[2.2.1]hept-2-ene (trivial name: norbornene), 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-hexyl-bicyclo[2.2.1]hept-2-ene, 5-octyl-bicyclo[2.2.1]-hept-2-ene, 5-octadecyl-bicyclo[2.2.1]hept-2-ene, 5-ethylidene-bicyclo[2.2.1]hept-2-ene, 5-methylidene-bicyclo[2.2.1]hept-2-ene, 5-vinyl-bicyclo[2.2.1]hept-2-ene, 5-propenyl-bicyclo[2.2.1]hept-2-ene, 5-methoxycarbonyl-bicyclo[2.2.1]hept-2-ene, 5-cyano-bicyclo[2.2.1]hept-2-ene, 5-methyl-5-methoxy-bicyclo[2.2.1]hept-2-ene, 5-methoxy-carbonyl-bicyclo[2.2.1]hept-2-ene, 5-ethoxycarbonyl-bicyclo[2.2.1]hept-2-ene, 5-methyl-5-ethoxycarbonyl-bicyclo[2.2.1]hept-2-ene, bicyclo[2.2.1]hept-5-enyl-2-methylpropionate, bicyclo[2.2.1]hept-5-enyl-2-methyloctanoate, bicyclo[2.2.1]hept-2-ene-5,6-dicarboxylic acid anhydride, 5-hydroxymethyl-bicyclo[2.2.1]hept-2-ene, 5,6-di(hydroxymethyl)-bicyclo[2.2.1]hept-2-ene, 5-hydroxyisopropyl-bicyclo[2.2.1]hept-2-ene, bicyclo[2.2.1]hept-2-ene, 5,6-dicarboxy-bicyclo[2.2.1]hept-2-ene, bicyclo-[2.2.1]hept-2-ene-5,6-dicarboxylic acid imide, 5-cyclopentyl-bicyclo[2.2.1]hept-2-ene, 5-cyclohexyl-bicyclo[2.2.1]hept-2-ene, 5-cyclohexenyl-bicyclo-[2.2.1]hept-2-ene and 5-phenyl-bicyclo[2.2.1]hept-2-ene; dicyclopentadienes such as tricyclo[4.3.1^{2,5}.0^{1,6}]dec-3,7-diene (trivial name: dicyclopentadiene), and alkyl-, cycloalkyl-, alkylene-, alkylidene-, aryl- or polar group-substituted products thereof; tricyclo[4.3.1^{2,5}.0^{1,6}]dec-3-ene, tricyclo[4.3.1^{2,5}.0^{1,6}]undec-3,7-diene, tricyclo-[4.3.1^{2,5}.0^{1,6}]undec-3,8-diene, and tricyclo[4.3.1^{2,5}.0^{1,6}]-undec-3-ene which is a partially hydrogenated product (or an adduct of cyclopentadiene and cyclohexene) thereof; methanotetrahydrofluorenes such as tetracyclo-[7.4.1^{10,13}.0^{1,9}.0^{2,7}]tridec-2,4,6-11-tetraene (trivial name: methanotetrahydrofluorene), and alkyl-, cycloalkyl-, alkylene-, alkylidene-, aryl- or polar group-substituted products thereof; and methanohexahydroanthracenes such as tetracyclo[8.4.1^{11,14}.0^{1,10}.0^{3,8}]tetradec-3,5,7,12-11-tetraene (trivial name: methanohexahydroanthracene), and alkyl-, cycloalkyl-, alkylene-, alkylidene-, aryl- or polar group-substituted products thereof.
      These norbornene monomers may be used either singly or in any combination thereof. The norbornene monomer having a norbornene ring structure as a bridged cyclic structure is used in a proportion of generally at least 10% by weight, preferably at least 15% by weight, more preferably at least 30% by weight in the synthesis of an ring-opening (co)polymer of the norbornene monomer(s) and a hydrogenated product thereof. The upper limit thereof is 100% by weight.
      Norbornene monomers having a norbornane ring structure and/or another norbornene ring structure in addition to one norbornene ring structure include tetracyclododecanes such as tetracyclo[4.4.1^{2,5}.1^{7,10}.0]-dodec-3-ene (trivial name: tetracyclododecene), 8-methyl-tetracyclo[4.4.1^{2,5}.1^{7,10}.0]dodec-3-ene, 8-methyl-tetracyclo[4.4.1^{2,5}.1^{7,10}.0]dodec-3-ene, 8-ethyl-tetracyclo-[4.4.1^{2,5}.1^{7,10}.0]dodec-3-ene, 8-methylidene-tetracyclo-[4.4.1^{2,5}.1^{7,10}.0]dodec-3-ene, 8-ethylidene-tetracyclo-[4.4.1^{2,5}.1^{7,10}.0]dodec-3-ene, 8-vinyl-tetracyclo-[4.4.1^{2,5}.1^{7,10}.0]dodec-3-ene, 8-propenyl-tetracyclo-[4.4.1^{2,5}.1^{7,10}.0]dodec-3-ene, 8-methoxycarbonyl-tetracyclo-[4.4.1^{2,5}.1^{7,10}.0]dodec-3-ene, 8-methyl-8-methoxycarbonyl-tetracyclo[4.4.1^{2,5}.1^{7,10}.0]dodec-3-ene, 8-hydroxymethyl-tetracyclo[4.4.1^{2,5}.1^{7,10}.0]dodec-3-ene 8-carboxy-tetracyclo[4.4.1^{2,5}.1^{7,10}.0]dodec-3-ene, 8-cyclopentyl-tetracyclo[4.4.1^{2,5}.1^{7,10}.0]dodec-3-ene, 8-cyclohexyl-tetracyclo[4.4.1^{2,5}.1^{7,10}.0]dodec-3-ene, 8-cyclohexenyl-tetracyclo[4.4.1^{2,5}.1^{7,10}.0]dodec-3-ene and 8-phenyl-tetracyclo[4.4.1^{2,5}.1^{7,10}.0]dodec-3-ene; and pentacyclo[6.5.1^{1,8}.1^{3,6}.0^{2,7}.0^{9,13}]pentadec-3,10-diene and pentacyclo[7.4.1^{3,6}.1^{10,13}.0^{1,9}.0^{2,7}]pentadec-4,11-diene.
      These norbornene monomers may be used either singly or in any combination thereof.
      The ring-opening (co)polymer of the norbornene monomer(s) can be obtained by subjecting at least one norbornene monomer to ring-opening (co)polymerization at a polymerization temperature of generally -50°C to 100°C under polymerization pressure of generally 0 to 50 kg/cm² in a solvent or without using any solvent using, as a ring-opening polymerization catalyst, (i) a catalyst system composed of a halide, nitrate or acetylacetone compound of a metal such as ruthenium, rhodium, palladium, osmium, iridium or platinum, and a reducing agent, or (ii) a catalyst system composed of a halide or acetylacetone compound of a metal such as titanium, vanadium, zirconium, tungsten or molybdenum, and an organoaluminum compound.
      A third component such as molecular oxygen, alcohol, ether, peroxide, carboxylic acid, acid anhydride, acid chloride, ester, ketone, nitrogen-containing compound, sulfur-containing compound, halogen-containing compound, molecular iodine or another Lewis acid can be added to the catalyst system to enhance polymerization activity and selectivity of ring-opening polymerization.
      The hydrogenated norbornene polymer can be obtained by hydrogenating the ring-opening (co)polymer with hydrogen in the presence of a hydrogenation catalyst in accordance with a method known *per se* in the art.
      The addition copolymer of the norbornene monomer and the vinyl compound can be obtained in accordance with, for example, a process comprising copolymerizing the monomer components at a polymerization temperature of generally -50°C to 100°C under polymerization pressure of generally 0 to 50 kg/cm² in a solvent or without using any solvent in the presence of a catalyst system composed of a titanium, zirconium or vanadium compound and an organoaluminum compound.
      No particular limitation is imposed on the vinyl compound so far as it is copolymerizable. However, examples thereof include ethylenes or α-olefins having 2 to 20 carbon atoms, such as ethylene, propylene, 1-butene, 1-pentane, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octane, 1-decene, 1-dodecene, 1-tetradecene, 1-hexadecene, 1-octadecene and 1-eicosene: cycloolefins such as cyclobutene, cyclopentene, cyclohexene, 3,4-dimethylcyclopentene, 3-methylcyclohexene, 2-(2-methylbutyl)-1-cyclohexene, cyclooctene and 3a,5,6,7a-tetrahydro-4,7-methano-1H-indene; and nonconjugated dienes such as 1,4-hexadiene, 4-methyl-1,4-hexadiene, 5-methyl-1,4-hexadiene and 1,7-octadiene. These vinyl compounds may be used either singly or in any combination thereof.
   (2) Monocyclic cycloolefin polymer:
      As the monocyclic cycloolefin polymer, may be used, for example, an addition polymer of a monocyclic cycloolefin monomer such as cyclohexene, cycloheptene or cyclooctene, which is disclosed in Japanese Patent Application Laid-Open No. 66216/1989.
   (3) Cyclic conjugated diene polymer:
      As the cyclic conjugated diene polymer, may be used, for example, a polymer obtained by subjecting a cyclic conjugated diene monomer such as cyclopentadiene or cyclohexadiene to 1,2- or 1,4-addition polymerization, or a hydrogenated product thereof, which is disclosed in Japanese Patent Application Laid-Open No. 136057/1994 or 258318/1995.
   (4) Vinyl alicyclic hydrocarbon polymer:
      As the vinyl alicyclic hydrocarbon polymer, may be used, for example, a polymer of a vinyl cyclic hydrocarbon monomer such as vinylcyclohexene or vinylcyclohexane, or a hydrogenated product thereof, which is disclosed in Japanese Patent Application Laid-Open No. 59989/1976, or a polymer obtained by hydrogenating the aromatic ring portion of a polymer of a vinyl aromatic monomer such as styrene or α-methylstyrene, which is disclosed in Japanese Patent Application Laid-Open No. 43910/1988 or 1706/1989.
      The molecular weight of the alicyclic structure-containing polymer used in the present invention is suitably selected as necessary for the end application intended, but is within a range of generally from 5,000 to 500,000, preferably from 8,000 to 200,000, more preferably from 10,000 to 100,000 when expressed by a weight average molecular weight in terms of polyisoprene as determined in the form of a cyclohexane solution (a toluene solution when the polymer is not dissolved in cyclohexane) by gel permeation chromatography. When the weight average molecular weight falls within this range, the mechanical strength, and molding and processing ability of the resulting heat-shrinkable film are balanced with each other at a high level. It is hence preferable to control the molecular weight within such a range.
      The glass transition temperature (Tg) of the alicyclic structure-containing polymer used in the present invention may be suitably selected as necessary for the end application intended. However, it is preferably 50 to 300°C, preferably 60 to 200°C, more preferably 70 to 150°C. When the glass transition temperature falls within this range, the heat resistance, heat shrinkability, and molding and processing ability of the resulting heat-shrinkable film are balanced with one another at a high level. It is hence preferable to control the glass transition temperature within such a range.
      The melt flow rate (measured at 280°C under a load of 2.16 kg in accordance with JIS K 6719) of the alicyclic structure-containing polymer used in the present invention is suitably selected as necessary for the end application intended. However, it is within a range of generally from 0.1 to 200 g/10 min, preferably from 0.5 to 150 g/10 min, most preferably from 1 to 100 g/10 min. If the melt flow rate is too low, the resulting film may be difficult to process in some cases, since the heating temperature of the forming material become higher upon the forming of the film. If the melt flow rate is too high, forming failure such as film breaking upon the forming of a film may occur in some cases. Accordingly, the melt flow rate within the above range is preferred because the mechanical strength, and forming and processing ability of the resulting heat-shrinkable film are balanced with each other at a high level.
      Incidentally, these alicyclic structure-containing polymers may be used either singly or in any combination thereof.
2. Soft polymer:
   In the thermoplastic resin material used in the present invention, the above-described alicyclic structure-containing polymer may be used by itself as a resin component. When a resin composition with a soft polymer incorporated into the alicyclic structure-containing polymer is used, however, mechanical strength such as film impact of the resulting film, the forming and processing ability of the resulting resin material, and the heat shrinkability of the film are improved. Therefore, it is hence preferable to use such a resin composition.
   The soft polymer incorporated into the alicyclic structure-containing polymer in the present invention means a polymer having a glass transition temperature (Tg) of generally at most 30°C. A polymer having plural Tgs or a polymer having both Tg and a melting point (Tm) is also included in the soft polymer so far as its lowest Tg is 30°C or lower.
   As examples of such a soft polymer, may be mentioned (a) olefin-based soft polymers composed mainly of an α-olefin such as ethylene or propylene, (b) isobutylene-based soft polymers composed mainly of isobutylene, (c) diene-based soft polymers composed mainly of a conjugated diene such as butadiene or isoprene, (d) cycloolefin-based soft ring-opening polymers composed mainly of a cycloolefin such as norbornene or cyclopentene, (e) soft polymers (organopolysiloxanes) having silicon-oxygen linkages as skeleton, (f) soft polymers composed mainly of an α,β-unsaturated acid and a derivative thereof, (g) soft polymers composed mainly of an unsaturated alcohol and an amine, or an acyl derivative or acetal thereof, (h) epoxy compound-based polymers, (i) fluorine-containing rubber, and (j) other soft polymers.
   As specific examples of these soft polymers, may be mentioned liquid polyethylene, atactic polypropylene, homopolymers of 1-butene, 4-methyl-1-butene, 1-hexene, 1-octene, 1-decene or the like; and copolymers such as ethylene·α-olefin copolymers, propylene·α-olefin copolymers, ethylene·propylene·diene terpolymers (EPDMs), ethylene·cycloolefin copolymers and ethylene·propylene· styrene terpolymers for the polymers (a).
   As the polymers (b), may be mentioned polyisobutylene, isobutylene·isoprene rubber and isobutylene·styrene copolymers. As the polymers (c), may be mentioned homopolymers of a conjugated diene, such as polybutadiene and polyisoprene; conjugated diene-based random copolymers such as butadiene·styrene random copolymers, isoprene·styrene random copolymers, acrylonitrile·butadiene copolymers, hydrogenated products of acrylonitrile·butadiene copolymers and acrylonitrile·butadiene·styrene terpolymers; and block copolymers of a conjugated diene and an aromatic vinyl hydrocarbon, such as butadiene·styrene block copolymers, styrene·butadiene·styrene block copolymers, isoprene· styrene block copolymers and styrene·isoprene·styrene block copolymers, and hydrogenated products thereof.
   As the polymers (d), may be mentioned metathesis ring-opening polymers of a norbornene monomer such as norbornene, vinylnorbornene or ethylidenenorbornene; metathesis ring-opening polymers of a monocycloolefin such as cyclobutene, cyclopentene or cyclooctene; and hydrogenated products thereof.
   As the polymers (e), may be mentioned silicone rubbers such as dimethyl polysiloxane, diphenyl polysiloxane and dihydroxy polysiloxane. As the polymers (f), may be mentioned homopolymers of an acrylic monomer, such as polybutyl acrylate, polybutyl methacrylate, polyhydroxyethyl methacrylate, polyacrylamide and polyacrylonitrile; and copolymers of an acrylic monomer and another monomer, such as butyl acrylate·styrene copolymers.
   As the polymers (g), may be mentioned homopolymers of an (esterified) unsaturated alcohol, such as polyvinyl alcohol, polyvinyl acetate, polyvinyl stearate, polyvinyl benzoate and polyvinyl maleate; and copolymers of an (esterified) unsaturated alcohol and another monomer, such as vinyl acetate·styrene copolymers. As the polymers (h), may be mentioned polyethylene oxide, polypropylene oxide and epichlorohydrin rubber.
   As the polymers (i), may be mentioned vinylidene fluoride rubber and ethylene tetrafluoride-propylene rubber. As the polymers (j), may be mentioned natural rubber, polypeptide, proteins, and polyester-based thermoplastic elastomers, vinyl chloride-based thermoplastic elastomers and polyamide-based thermoplastic elastomers described in Japanese Patent Application Laid-Open No. 73709/1996.
   These soft polymers may have a crosslinked structure or may be modified by introducing a functional group.
   Among the above-described soft polymers, the soft polymers (a), (b) and (c) are preferred because they are excellent in rubber elasticity and also in mechanical strength, flexibility and dispersibility, and the film impact, forming and processing ability, heat shrinkability, transparency, chemical resistance and the like are improved. In particular, the diene-based soft polymers (c) are preferred, with hydrogenated products of the diene-based soft polymers (c), in which the carbon-carbon unsaturated bond in the conjugated diene bound unit has been hydrogenated being more preferred. Specific examples of such soft polymers include hydrogenated products of homopolymers such as polybutadiene; hydrogenated products of random copolymers such as butadiene·styrene copolymers; and hydrogenated products of block copolymers such as butadiene·styrene block copolymers, styrene·butadiene· styrene block copolymers, isoprene·styrene block copolymers and styrene·isoprene·styrene block copolymers.
   A proportion of the soft polymer incorporated into the thermoplastic resin material in the present invention is suitably determined within limits not impeding the properties inherent in the alicyclic structure-containing polymer and limits permitting improving film impact, forming and processing ability and the like. The proportion is generally 0.01 to 200 parts by weight, preferably 0.05 to 100 parts by weight, more preferably 0.1 to 50 parts by weight per 100 parts by weight of the alicyclic structure-containing polymer.
   Incidentally, these soft polymers may be used either singly or in any combination thereof.
   In the present invention, the soft polymer may be used in the production of the heat-shrinkable film by kneading it with the alicyclic structure-containing polymer as it is. However, for example, the soft polymer may be dispersed in the alicyclic structure-containing polymer to prepare a kneaded mixture, and the kneaded mixture may be treated with an organic peroxide, thereby form a crosslinked structure between the alicyclic structure-containing polymer and the soft polymer.
   As examples of the organic peroxides used herein, may be mentioned ketone peroxides such as methyl ethyl ketone peroxide and cyclohexanone peroxide; peroxy ketals such as 1,1-bis(t-butyl peroxy)cyclohexane and 2,2-bis(t-butyl peroxy)octane; hydroperoxides such as t-butyl hydroperoxide, cumene hydroperoxide, 2,5-dimethylhexane-2,5-dihydroperoxide and 1,1,3,3-tetramethylbutyl hydroperoxide; dialkyl peroxides such as di-t-butyl peroxide, 2,5-dimethyl-2,5-di(t-butyl peroxy)hexane (trade name: Perhexane 25B) and 2,5-dimethyl-2,5-di(t-butyl peroxy)hexyne-3; diacyl peroxides such as lauroyl peroxide and benzoyl peroxide; and peroxyesters such as t-butyl peroxyacetate, t-butyl peroxybenzoate and 2,5-dimethyl-2,5-di(benzoyl peroxy)hexane.
   A proportion of the organic peroxide incorporated is generally 0.01 to 1 part by weight, preferably 0.05 to 0.5 parts by weight per 100 parts by weight of the total weight of the resin component consisting of the alicyclic structure-containing polymer and the soft polymer.
   In order to enhance crosslinking efficiency, a compound having at least two radical-polymerizable functional groups in its molecule may preferably be contained as a crosslinking accelerator upon the treatment with the organic peroxide, since a heat-shrinkable film excellent in impact resistance can be provided.
   Examples of the crosslinking accelerator include divinylbenzene, vinyl acrylate and vinyl methacrylate. These crosslinking accelerators are used in a proportion of generally at most 1 part by weight, preferably 0.1 to 0.5 parts by weight per 100 parts by weight of the total weight of the resin component consisting of the alicyclic structure-containing polymer and the soft polymer.
3. Other components:
   Into the thermoplastic resin material used in the present invention, may be incorporated other components in addition to the alicyclic structure-containing polymer and soft polymer, as needed. Other components include other polymers, antioxidants, other compounding additives, etc. No particular limitation is imposed on the other compounding additives so far as they are commonly used in general resin industries. Examples thereof include ultraviolet absorbents, light stabilizer, near infrared absorbents, coloring agents such as dyes and pigments, alcoholic compounds, plasticizers, antistatic agents and fillers.
   (1) Other polymers:
      No particular limitation is imposed on the other polymers, and other noncrystalline resins and crystalline resins may be used. However, the crystalline polymers are particularly preferably used from the viewpoints of the mechanical strength and moisture resistance of the resulting heat-shrinkable film.
      Other noncrystalline resins include polyvinyl chloride, polymethyl methacrylate, polystyrene, polymethyl methacrylate·styrene copolymers, polyacrylonitrile, polyacrylonitrile·styrene copolymers, high impact polystyrene (HIPS), acrylonitrile·butadiene·styrene terpolymers (ABS resins), polycarbonate, polyarylate, polysulfone, poly(ether sulfone) and poly(phenylene ether). Among these, polyvinyl chloride, polystyrene, high impact polystyrene and poly(phenylene ether) are preferred from the viewpoints of the moisture resistance and mechanical strength of the resulting heat-shrinkable film.
      The crystalline resins include a part of the resins exemplified as the noncrystalline resins, but are distinguished as those having a crystalline melting point observed in calorimetry. Specific examples thereof include crystalline polyethylene resins such as linear or branched high density polyethylene, low density polyethylene and ultra-high-molecular-weight polyethylene; crystalline polypropylene resins such as linear or branched high density polypropylene and low density polypropylene; crystalline polyolefin resins such as polymethylpentene, polybutene, polymethylbutene, polymethylhexene, polyvinylnaphthalene and polyxylene; crystalline polyester resins such as polyethylene terephthalate, polybutylene terephthalate, polyethylene naphthalate and aromatic polyester; crystalline polyamide resins such as nylon 6, nylon 66, nylon 12 and polyamide-imide; crystalline fluororesins such as polyvinylidene fluoride and polytetrafluoroethylene; and crystalline resins such as polyvinylidene chloride, polyacrylonitrile, syndiotactic polystyrene, polyoxymethylene, poly(phenylene sulfide), poly(ether ether ketone), cellulose, acetal resins, chlorinated polyether, ethylene-vinyl acetate copolymers and liquid crystal polymers (aromatic polycyclic fused polymers).
      Among these, the crystalline polyolefin resins, crystalline polyester resins and crystalline polyamide resins are preferred from the viewpoints of the moisture resistance and mechanical strength of the resulting heat-shrinkable film, with the crystalline polyolefin resins being particularly preferred. Of these, the crystalline polyethylene resins and crystalline polypropylene resins are further preferred from the viewpoint of the balance between the moisture resistance and the mechanical strength.
      In the present invention, the crystalline resins include not only resins entirely crystallized, but also resin partially crystallized.
   (2) Antioxidant:
      In the present invention, it is preferable that an antioxidant be added to the alicyclic structure-containing polymer from the viewpoints of heat resistance, and forming and processing ability upon forming of a heat-shrinkable film, and the heat resistance of the film itself.
      No particular limitation is imposed on the antioxidant. However, examples thereof include phenolic antioxidants, phosphorus-containing antioxidants, thioether type antioxidants and lactone type antioxidants which are commonly used in general resin industries. The phenolic antioxidants are particularly preferred because the heat resistance of the resulting heat-shrinkable film can be made excellent.
      Examples of the phenolic antioxidants include phenol acrylate antioxidants such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl)phenyl acrylate; alkyl-substituted phenolic compounds such as 2,6-di-t-butyl-4-methylphenol, 2,6-di-t-butyl-4-ethylphenol, octadecyl-3-(3,5-di-t-butyl-4-hydroxyphenyl) propionate, 2,2'-methylene-bis(4-methyl-6-t-butylphenol), 4,4'-butylidene-bis(6-t-butyl-m-cresol, 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis[methylene-3(3',5'- di-t-butyl-4'-hydroxyphenyl)propionate]methane, triethylene glycol bis[3-(3-t-butyl-4-hydroxy-5-methylphenyl) propionate] and tocopherol; and triazine group-containing phenolic compounds such as 6-(4-hydroxy-3,5-di-t-butylanilino)-2,4-bis-octylthio-1,3,5-triazine, 6-(4-hydroxy-3,5-dimethylanilino)-2,4-bisoctylthio-1,3,5-triazine, 6-(4-hydroxy-3-methyl-5-t-butylanilino)-2,4-bis-octylthio-1,3,5-triazine and 2-octylthio-4,6-bis-(3,5-di-t-butyl-4-oxyanilino)-1,3,5-triazine. Among these, the phenol acrylate compounds and alkyl-substituted phenolic compounds are preferred, with the alkyl-substituted phenolic compounds being particularly preferred in that the heat resistance of the resulting heat-shrinkable film can be made excellent.
      Examples of the phosphorus-containing antioxidants include monophosphite compounds such as triphenyl phosphite, diphenylisodecyl phosphite, phenyldiisodecyl phosphite, tris(nonylphenyl) phosphite, tris-(dinonylphenyl) phosphite, tris(2,4-di-t-butylphenyl) phosphite, tris(2-t-butyl-4-methylphenyl) phosphite, tris-(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide and 10-decyloxy-9,10-dihydro-9-oxa-10-phosphaphenanthrene; and diphosphite compounds such as 4,4'-butylidene-bis(3-methyl-6-t-butylphenyl-di-tridecyl phosphite), 4,4'-isopropylidene-bis[phenyl-di-alkyl(C₁₂-C₁₅) phosphite], 4,4'-isopropylidene-bis[diphenylmonoalkyl(C₁₂-C₁₅) phosphite], 1,1,3-tris(2-methyl-4-di-tridecyl-phosphite-5-t-butylphenyl)butane, tetrakis(2,4-di-t-butylphenyl)-4,4'-biphenylene diphosphite, cyclic neopentanetetrayl bis(isodecyl phosphite), cyclic neopentanetetrayl bis(nonylphenyl phosphite), cyclic neopentanetetrayl bis(2,4-di-t-butylphenyl phosphite), cyclic neopentanetetrayl bis(2,4-dimethylphenyl phosphite) and cyclic neopentanetetrayl bis(2,6-di-t-butylphenyl phosphite). Among these, the monophosphite compounds are preferred, with tris(nonylphenyl) phosphite, tris(dinonylphenyl) phosphite and tris(2,4-di-t-butylphenyl) phosphite being particularly preferred in that the heat resistance of the resulting heat-shrinkable film can be made excellent.
      Examples of the sulfur-containing antioxides include dilauryl 3,3-thiodipropionate, dimyristyl 3,3'-thiodipropionate, distearyl 3,3-thiodipropionate, laurylstearyl 3,3-thiodipropionate, pentaerythritol tetrakis(β-lauryl thioproionate) and 3,9-bis(2-dodecylthioethyl)-2,4,8,10-tetraoxaspiro[5,5]undecane.
      No particular limitation is imposed on the lactone type antioxidants so far as they are compounds containing a lactone structure. However, aromatic lactone compounds are preferred. Among these, those having a benzofuran skeleton are more preferred in that the heat resistance of the resulting heat-shrinkable film can be made excellent. 3-Arylbenzofuran-2-one having an aryl group as a substituent group at a side chain of the furan ring is still more preferred. As an example thereof, may be mentioned 5,7-di-tert-butyl-3-(3,4-di-methylphenyl)-3H-benzofuran-2-one.
      A proportion of the antioxidant incorporated is within a range of generally from 0.0001 to 2.0 parts by weight, preferably from 0.001 to 1.5 parts by weight, more preferably from 0.01 to 1.0 part by weight per 100 parts by weight of the alicyclic structure-containing polymer. If the proportion of the antioxidant incorporated into the alicyclic structure-containing polymer is too high, a failure in dispersion occurs to deteriorate the transparency of the resulting film. If the proportion is too low on the other hand, the heat resistance of the resulting film may be deteriorated in some cases.
   (3) Ultraviolet absorbent:
      Examples of the ultraviolet absorbents include benzotriazole type ultraviolet absorbents such as 2-(2-hydroxy-5-methylphenyl)-2H-benzotriazole, 2-(3-t-butyl-2-hydroxy-5-methylphenyl)-5-chloro-2H-benzotriazole, 2-(3,5-di-t-butyl-2-hydroxyphenyl)-5-chloro-2H-benzotriazole, 2-(3,5-di-t-butyl-2-hydroxyphenyl)-2H-benzotriazole, 5-chloro-2-(3,5-di-t-butyl-2-hydroxyphenyl)-2H-benzotriazole and 2-(3,5-di-t-amyl-2-hydroxyphenyl)-2H-benzotriazole; benzoate type ultraviolet absorbents such as 4-t-butylphenyl 2-hydroxybenzoate, phenyl 2-hydroxybenzoate, 2,4-di-t-butylphenyl 3,5-di-t-butyl-4-hydroxybenzoate, hexadecyl 3,5-di-t-butyl-4-hydroxybenzoate, 2-(2H-benzotriazol-2-yl)-4-methyl-6-(3,4,5,6-tetrahydrophthalimidylmethyl)phenol, 2-(2-hydroxy-5-t-octylphenyl)-2H-benzotriazole and 2-(2-hydroxy-4-octylphenyl)-2H-benzotriazole; benzophenone type ultraviolet absorbents such as 2,4-dihydroxybenzophenone, 2-hydroxy-4-methoxybenzophenone, 2-hydroxy-4-methoxybenzophenone-5-sulfonic acid trihydrate, 2-hydroxy-4-octyloxybenzophenone, 4-dodecyloxy-2-hydroxybenzophenone, 4-benzyloxy-2-hydroxybenzophenone, 2,2',4,4'-tetrahydroxybenzophenone and 2,2'-dihydroxy-4,4'-dimethoxybenzophenone; acrylate type ultraviolet absorbents such as ethyl-2-cyano-3,3-diphenyl acrylate and 2'-ethylhexyl-2-cyano-3,3-diphenyl acrylate; and metal complex type ultraviolet absorbents such as [2,2'-thiobis(4-t-octylphenolate)]-2-ethylhexylamine nickel.
   (4) Light stabilizer:
      Examples of the light stabilizers include hindered amine type light stabilizers such as 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-di-t-butyl-4-hydroxybenzyl)-2-n-butylmalonate and 4-(3-(3,5-di-t-butyl-4-hydroxyphenyl)propionyloxy)-1-[2-(3-(3,5-di-t-butyl-4-hydroxyphenyl)propionyloxy)ethyl]-2,2,6,6-tetramethylpiperidine.
   (5) Near infrared absorbent:
      Examples of the near infrared absorbents include cyanine type near infrared absorbents, pyrylium type near infrared absorbents, squarylium type near infrared absorbents, croconium type near infrared absorbents, azulenium type near infrared absorbents, phthalocyanine type near infrared absorbents, dithiol metal complex type near infrared absorbents, naphthoquinone type near infrared absorbents, anthraquinone type near infrared absorbents, indophenol type near infrared absorbents, and azide type near infrared absorbents. As commercially-available near infrared absorbents, may be mentioned SIR-103, SIR-114, SIR-128, SIR-130, SIR-132, SIR-152, SIR-159 and SIR-162 (all, products of Mitsui Toatsu Dye Co., Ltd.), and Kayasorb IR-750, Kayasorb IRG-002, Kayasorb IRG-003, IR-820B, Kayasorb IRG-022, Kayasorb IRG-023, Kayasorb CY-2, Kayasorb CY-4 and Kayasorb CY-9 (all, products of Nippon Kayaku Co., Ltd.).
   (6) Dye:
      No particular limitation is imposed on the dyes so far as they can be dispersed or dissolved in the alicyclic structure-containing polymer. However, oil-soluble dyes (various kinds of C.I. Solvent dyes) are widely used in that they have excellent compatibility with the alicyclic structure-containing polymer. Specific examples of the oil-soluble dyes include various kinds of C.I. Solvent dyes described in Color Index Vol. 3 published by The Society of Dyes and Colourists Co.
   (7) Pigment:
      Examples of the pigments include diarylide pigments such as Pigment Red 38; azo lake pigments such as Pigment Red 48:2, Pigment Red 53 and Pigment Red 57:1; condensed azo pigments such as Pigment Red 144, Pigment Red 166, Pigment Red 220, Pigment Red 221 and Pigment Red 248; benzimidazolone pigments such as Pigment Red 171, Pigment Red 175, Pigment Red 176, Pigment Red 185 and Pigment Red 208; quinacridone pigments such as Pigment Red 122; perylene pigments such as Pigment Red 149, Pigment Red 178 and Pigment Red 179; and anthraquinone pigments such as Pigment Red 177.
      When a heat-shrinkable film to be produced in accordance with the process of the present invention is required to be colored, either dyes or pigments may be used without any limitations. However, coloring with dyes is preferred when high light transmission property is required. Since the ultraviolet absorbents may visually show a color of yellow to red, while the near infrared absorbents may visually show a color of black, they must not be strictly distinguished from the dyes. In addition, these absorbents may also be used in combination with the dyes.
   (8) Alcoholic compound:
      As the alcoholic compounds, may be used oryanic compounds such as esters of aliphatic alcohols, esters or partial esters of polyhydric alcohols, ethers of aliphatic alcohols, and ethers or partial ethers of polyhydric alcohols. Specific examples thereof include glyceryl monostearate, glyceryl monolaurate, glyceryl distearate, pentaerythritol monostearate, pentaerythritol distearate and pentaerythritol tristearate.
   (9) Plasticizer:
      As the plasticizers, may be used, for example, phosphoric acid triester type plasticizers such as tricresyl phosphate, trixylyl phosphate, triphenyl phosphate, triethylphenyl phosphate, diphenylcresyl phosphate, monophenyldicresyl phosphate, diphenylmonoxylenyl phosphate, monophenyldixylenyl phosphate, tributyl phosphate and triethyl phosphate; phthalate type plasticizers such as dimethyl phthalate, dibutyl phthalate, diheptyl phthalate, di-n-octyl phthalate, di-2-ethylhexyl phthalate, diisononyl phthalate, octyldecyl phthalate and butylbenzyl phthalate; fatty acid-monobasic acid ester type plasticizers such as butyl oleate and glyceryl monooleate; dihydric alcohol ester type plasticizers; and oxy acid ester type plasticizers. Among these, the phosphoric acid triester type plasticizers are preferred, with tricresyl phosphate and trixylyl phosphate being particularly preferred.
      Further, hydrocarbon polymers which are liquid at normal temperature, or low-molecular-weight liquid hydrocarbons may be used as the plasticizers. Among these, linear or branched liquid hydrocarbon polymers having no hydrocarbon ring in their main chains are preferred in that they have little possibility of bleed out of the surface of the resulting film. Specific examples of the liquid hydrocarbon polymers include polyisobutene, hydrogenated polybutadiene and hydrogenated polyisoprene. Specific examples of the low-molecular-weight, liquid hydrocarbons include squarane (C30H62, molecular weight = 422.8), and liquid paraffin (white oil; ISO VG10, ISO VG15, ISO VG32, ISO VG68, ISO VG100, VG8 and VG21 prescribed in JIS K 2231, etc.).
   (10) Antistatic agent:
      Examples of the antistatic agents include long-chain alkyl alcohols such as stearyl alcohol and behenyl alcohol, and fatty acid esters of polyhydric alcohols, such as glyceryl monostearate and pentaerythritol monostearate. Among these, stearyl alcohol and behenyl alcohol are particularly preferred.
   (11) Filler:
      As examples of the fillers, may be mentioned silica, diatomaceous earth, alumina, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite, talc, clay, mica, asbestos, glass fibers, glass flake, glass beads, calcium silicate, montmorillonite, bentonite, graphite, aluminum powder, molybdenum sulfide, boron fibers, silicon carbide fibers, polyethylene fibers, polypropylene fibers, polyester fibers and polyamide fibers.
      These compounding additives may be used either singly or in any combination thereof. A compounding proportion thereof is suitably selected within limits not impeding the objects of the present invention. However, it is generally within a range of from 0.001 to 5 parts by weight, preferably from 0.01 to 1 part by weight per 100 parts by weight of the alicyclic structure-containing polymer.
4. Crystalline resin layer:
   The heat-shrinkable film according to the present invention is a single-layer or multi-layer, heat-shrinkable film having at least a layer of the thermoplastic resin material comprising the alicyclic structure-containing polymer. In the case of the multi-layer heat-shrinkable film, for example, a crystalline resin layer may be arranged.
   As specific examples of the crystalline resin, may be mentioned crystalline polyethylene resins, crystalline polypropylene resins, crystalline polyester resins, crystalline polyamide resins, crystalline fluororesins and other crystalline resins. As specific examples of these crystalline resins, may be mentioned those described above.
   Among these, the crystalline polyethylene resins and crystalline polypropylene resins are preferred from the viewpoint of balance between the moisture resistance and the mechanical strength of the resulting heat-shrinkable film.
   The crystalline resin layer may contain the above-described soft polymer, antioxidant and other compounding additives. With respect to the compounding proportions thereof, the soft polymer is contained in a proportion of generally 0.01 to 200 parts by weight, preferably 0.05 to 100 parts by weight, more preferably 0.1 to 50 parts by weight per 100 parts by weight of the crystalline resin, the antioxidant is contained in a proportion of generally 0.0001 to 2.0 parts by weight, preferably 0.001 to 1.5 parts by weight, more preferably 0.01 to 1.0 parts by weight, and the other compounding additives are contained in a proportion of generally 0.001 to 5 parts by weight, preferably 0.01 to 1 part by weight. These components are suitably selected within these ranges so as not to impair the objects of the present invention.
   These soft polymer, antioxidant and other compounding additives may be used either singly or in any combination thereof. The soft polymer may be used in combination with the above-described organic peroxide and crosslinking accelerator.
5. Heat-shrinkable film:
   The heat-shrinkable film in the present invention is a single-layer or multi-layer, heat-shrinkable film having a layer of the thermoplastic resin material comprising the alicyclic structure-containing polymer. The thermoplastic resin layer is stretched in at least a uniaxial direction. When the heat-shrinkable film according to the present invention is held under a temperature atmosphere ranging from (Tg - 40°C) to (Tg + 80°C) of the alicyclic structure-containing polymer, the film shrinks to a range of 30 to 97 (namely, having a heat shrinkage factor of 3 to 70%) after holding when the initial dimension is regarded as 100. This heat shrinkage factor is preferably 4 to 65%, more preferably 5 to 60%. When the heat shrinkage factor falls within this range, the adhesion of the heat-shrinkable film to a product to be packaged, and the various properties of the film are balanced with one another at a high level. It is hence preferable for the film to have a heat shrinkage factor within such a range.
   No particular limitation is imposed on the draw ratio of the heat-shrinkable film. However, it is preferably at least 1.5 times, more preferably 1.5 to 10 times, particularly preferably 2 to 9 times in a uniaxial direction. The film is more preferably biaxially stretched at a draw ratio of 1.5 to 10 times in each of machine and transversal directions. The draw ratio is particularly preferably 2 to 9 times, most preferably 2 to 8 times in each of biaxial directions.
   No particular limitation is imposed on the ithickness of the heat-shrinkable film according to the present invention. However, the thickness is suitably selected within a range of preferably from 1 to 100 µm, more preferably from 2 to 50 µm. The thickness is preferably selected within this range, since the heat shrinkability and strength of the film are balanced with each other at a high level.
   The heat-shrinkable film according to the present invention may be a multi-layer film in which, for example, a layer of a crystalline resin is arranged in addition to the layer of the thermoplastic resin material comprising the alicyclic structure-containing polymer. In this case, no particular limitation is imposed on the type of the multi-layer, and the film may be provided as a multi-layer film of at least 2 or 3 layers.
   When the multi-layer, heat-shrinkable film is formed with 3 layers, 2 layers formed of other resins may be arranged on one side of the layer of the thermoplastic resin material comprising the alicyclic structure-containing polymer, or the other resin layers may be respectively arranged on both sides thereof. In these cases, for example, 2 crystalline resin layers may be layers formed of the same resin, or layers separately formed of different resins. The multi-layer, heat-shrinkable film may be formed with at least 4 resin layers. In this case, a structure of, for example, a crystalline resin layer/the thermoplastic resin material layer/a crystalline resin layer/a crystalline resin layer may be mentioned.
   In the multi-layer, heat-shrinkable film, the total thickness of the layer(s) of the thermoplastic resin material comprising the alicyclic structure-containing polymer is preferably 10 to 90%, more preferably 15 to 70% based on the thickness of all the resin layers. When the thickness of the thermoplastic resin material layer(s) is controlled within this range, the moisture resistance, heat shrinkability and mechanical strength of the film can be balanced with one another at a high level.
   In the multi-layer, heat-shrinkable film, the total thickness of the crystalline resin layers is preferably 10 to 90%, more preferably 30 to 80% based on the thickness of all the resin layers. When the total thickness of the crystalline resin layers is controlled within this range, the moisture resistance, heat shrinkability and mechanical strength of the film can be balanced with one another at a high level.
   The crystalline resin layer may be formed of a single crystalline resin or a mixture of at least 2 different crystalline resins. The crystalline resin layer is preferably a layer subjected to a stretching treatment from the viewpoint of sufficiently exhibiting the heat shrinkability. No particular limitation is imposed on the draw ratio in this case. However, the draw ratio is at least 1.5 times in a uniaxial direction, preferably within a range of each 1.5 to 10 times in biaxial directions.
   In the case of the multi-layer, heat-shrinkable film, an adhesive layer may be provided between the respective resin layers in order to enhance the adhesion between the respective resin layers. Publicly known adhesives may be widely used as adhesives. For example, maleic anhydride-modified polyolefin resins (for example, Admer produced by Mitsubishi Petrochemical Engineering Co., Ltd., Modic produced by Mitsubishi Kagaku Co., Ltd., etc.), low crystalline (non-crystalline) soft polymers such as unsaturated polyolefins, ethylene·acrylic acid ester· maleic anhydride terpolymers (for example, Bondyne produced by Sumika CDF Kagaku Co., Ltd., etc.), or adhesive resin compositions containing these resins or polymers may be used.
   The heat-shrinkable films according to the present invention are excellent in mechanical strength and moisture resistance after heat shrinking. In the heat-shrinkable films according to the present invention, the film impact retention after heat shrinking is generally at least 70%, preferably at least 80%, more preferably at least 85%, particularly preferably at least 90%. Supposing that the initial value (value before heat shrinking) of the film impact (the measuring method will be described subsequently) of the heat-shrinkable film is F₀, and the film impact after heat shrinking is F₁, the film 'impact retention is a value calculated in accordance with the equation, (F₁/F₀) x 100. The publicly known heat-shrinkable film obtained by biaxially stretching a cycloolefin resin is greatly deteriorated in film impact after heat shrinking, and the film impact retention thereof is about 40 to 50%.
   In the heat-shrinkable films according to the present invention, the rate of increase of water vapor transmission rate after heat shrinking is generally at most 1.20, preferably at most 1.15, more preferably at most 1.10, particularly preferably at most 1.05. Supposing that the initial value of the water vapor transmission rate (the measuring method will be described subsequently) of the heat-shrinkable film is T₀, and the water vapor transmission rate after heat shrinking is T₁, the rate of increase of water vapor transmission rate is a value represented by a ratio T₁/T₀. The publicly known heat-shrinkable film obtained by biaxially stretching a cycloolefin resin becomes greater in water vapor transmission rate after heat shrinking, and the rate of increase of water vapor transmission rate amounts to about 1.3 to 2.0.
   The heat-shrinkable films according to the present invention are excellent in tensile strength (the measuring method will be described subsequently) and can exhibit tensile strength of at least 5 kgf/mm², preferably at least 6 kgf/mm².
   The heat-shrinkable films according to the present invention are high in film impact after heat shrinking and low in the rate of increase of water vapor transmission rate after heat shrinking, whereby the shelf stability of contents (product to be packaged) after heat shrink packaging can be enhanced.
6. Production process of heat-shrinkable film:
   The heat-shrinkable films according to the present invention can be obtained by forming the thermoplastic resin material comprising the alicyclic structure-containing polymer into an unstretched sheet or parison utilizing a T-die method, blown-film extrusion method, press molding method or the like, and then uniaxially or biaxially stretching the sheet or parison. The sheet or parison is preferably biaxially stretched from the viewpoint of heat shrinkability.
   When the unstretched sheet or parison is uniaxially or biaxially stretched, there is adopted a process in which the unstretched sheet is heated at a temperature not lower than the glass transition temperature (Tg) of the alicyclic structure-containing polymer, but lower than the melting point thereof and then stretched. As a stretching method, there can be adopted a generally used stretching method such as a roll stretching method, tenter stretching method or blown-film extrusion method.
   When a heat-shrinkable film composed of only a layer of the thermoplastic resin material comprising the alicyclic structure-containing polymer is produced, an unstretched sheet or parison having a thickness of about 0.01 to 2 mm is produced making good use of, for example, a T-die extrusion method or blown-film extrusion method. The unstretched sheet or parison is then heated to a temperature higher by 0 to 60°C, preferably 10 to 40°C than the glass transition temperature of the resin. The unstretched sheet or parison in a heated state is then uniaxially stretched in a machine direction or transverse direction, or sequentially or simultaneously biaxially stretched in machine and transverse directions. The draw ratio is preferably 1.5 to 10 times, more preferably 2 to 9 times, particularly preferably 2 to 8 times in at least a uniaxial direction. Uniaxial or biaxial stretching is conducted in such a manner, thereby producing a heat-shrinkable film having a thickness of generally about 1 to 100 µm, preferably about 2 to 50 µm. This heat-shrinkable film is preferred because balance between the mechanical strength and the heat shrinkability of the film is excellent.
   When a multi-layer, heat-shrinkable film is produced, there are ① a process in which a multi-layer sheet is formed by laminating an unstretched sheet formed of the thermoplastic resin material comprising the alicyclic structure-containing polymer and an unstretched sheet formed of the crystalline resin on each other, and the multi-layer sheet is then subjected to a stretching treatment to obtain a multi-layer, heat-shrinkable film, and ② a process in which an unstretched or stretched sheet formed of the crystalline resin is laminated on a stretched sheet formed of the thermoplastic resin material comprising the alicyclic structure-containing polymer to obtain a multi-layer, heat-shrinkable film. As a laminating method, may be suitably used any of the publicly known methods such as co-extrusion methods such as a T-die co-extrusion method, blown-film co-extrusion method and co-extrusion lamination method; film laminating methods such as dry lamination; and a coating method of coating a film of a base resin with a solution of a resin to be laminated. In, for example, the co-extrusion method, co-extruding the thermoplastic resin material comprising the alicyclic structure-containing polymer and the crystalline resin in the form of a sheet in a molten state, and the sheet is uniaxially or biaxially stretched, whereby a multi-layer, heat-shrinkable film can be obtained. In the film laminating method, an unstretched sheet formed of the thermoplastic resin material comprising the alicyclic structure-containing polymer and an unstretched sheet formed of the crystalline resin are superimposed on each other to obtain a multi-layer, heat-shrinkable film, such sheets are heated and pressed to produce a laminated sheet, and the laminated sheet is then uniaxially or biaxially stretched, whereby a multi-layer, heat-shrinkable film can be obtained.
7. Heat shrink processing process:
   No particular limitation is imposed on the process of shrink-wrapping a product to be packaged with the heat-shrinkable film according to the present invention. However, as a general process, may be used such a process that the product to be packaged is roughly wrapped with the film, and the wrapped product is heated by passing it through a hot-air tunnel (hereinafter referred to as the shrink tunnel), whereby the film shrinks by shrinkage force generated in the film itself to come into close contact with the product to be packaged so as to permit conducting tight packaging.
   The tensible force of such a heat-shrinkable film permits conducting bundling of a great number of products, and random packaging and bundling of special shapes.
   As examples of shrink packaging machines used in heat shrink processing, may be mentioned an L-type seal system of shrink packaging machine, a sleeve system of shrink packaging machine, a four way seal system of shrink packaging machine and a shrink horizontal type pillow packaging machine. The shrink tunnel used in a heat shrinking machine is a heating device required after packaging with the shrinkable film. A heat of source thereof is mainly electricity. According to this device, air is heated and hot air is blown out of supply openings provided at top and bottom, and left and right of the device to heat the package and shrink the film. Great temperature change is required according to the kind, thickness and performance of the heat-shrinkable film used. Control of the amount of hot air blown out of the supply openings provided at top and bottom, or left and right of the device is also required according to the form of the package. Therefore, the general-purpose shrink tunnel is so constructed that these controls can be conducted.
   The heat-shrinkable film or the package obtained therefrom may be subjected to print processing. No particular limitation is imposed on the method of the print processing, and any publicly known method may be used. Examples thereof include letterpress printing, integlio printing and lithographic printing. More specifically, rubber letterpress printing, dry offset printing, gravure offset printing, offset printing, screen process printing, etc. may be mentioned. The kinds of printing inks applied to the printing may be suitably selected according to the printing methods. Examples thereof include letterpress inks, flexographic inks, dry offset inks, gravure inks, gravure offset inks, offset inks and screen process inks. A printing ink is composed of at least a coloring material (pigment, dye or the like), a vehicle (a mixture of an oil or fat, a resin and a solvent; examples of the oil or fat include drying oil, semidrying oil, nondrying oil and processing oil; examples of the resin include general natural resins and synthetic resins; examples of the solvent include hydrocarbon solvents, ester solvents, ketone solvents, alcohol solvents and aqueous solvents) and auxiliaries (compounds, dryers, and besides additives such as dispersing agents, reactants and antifoaming agents). The composition thereof is suitably selected according to the kind of the alicyclic structure-containing polymer to be printed, the purpose of use and the like.
   In order to enhance the adhesion of the ink to the heat-shrinkable film, the heat-shrinkable film may be subjected to a surface treatment in advance. For example, corona discharge treatment, plasma discharge treatment, embossing treatment, sand matte processing treatment, satin-processing treatment, etc. may be mentioned. The heat-shrinkable film may be subjected to the print processing after heat shrinking.
8. Use application:
   The heat-shrinkable films according to the present invention are excellent in heat shrink property, moisture resistance, chemical resistance and transparency and moreover excellent in performance after heat shrinking, and are markedly small in deterioration of moisture resistance and mechanical strength after heat shrinking in particular. In addition, the heat-shrinkable films are also excellent in balance among these properties. For reasons of these properties, the heat-shrinkable films according to the present invention are suitable for use as heat shrink packaging materials for storage and shipment of food, drug, and miscellaneous goods such as instruments or devices, writing utensils and notebooks; seal packaging materials for preventing caps, stoppers and the like from being opened; and heat-shrinkable label materials for bottles, containers and the like. The heat-shrinkable films according to the present invention are useful as various kinds of shrink films and also excellent in visibility and protective property for contents after packaging.

### EXAMPLES

The present invention will hereinafter be described more specifically by the following Preparation Examples, Examples and Comparative Examples. However, the scope of the present invention is not limited to these examples.

All designations of "part" or "parts" and "%" as will be used in these examples mean part or parts by weight and % by weight unless expressly noted. Various physical properties were measured in accordance with the following methods:
(1) Glass transition temperature (Tg):
   The glass transition temperature of each sample was measured in accordance with the differential scanning calorimetry (DSC method).
(2) Weight average molecular weight:
   The molecular weight of each sample was determined in terms of polyisoprene as measured by gel permeation chromatography (GPC) using cyclohexane as a solvent unless expressly noted.
(3) Melt flow rate:
   The melt flow rate of each sample was measured at a temperature of 280°C under a load of 2.16 kgf in accordance with JIS K 6719.
(4) Tensile strength:
   As evaluation of the mechanical strength of each heat-shrinkable film sample, the tensile strength thereof was determined in accordance with JIS K 7127 and evaluated in accordance with the following standard:
   - A:: At least 7 kgf/mm²,
   - B:: Not lower than 6 kgf/mm², but lower than 7 kgf/mm²,
   - C:: Not lower than 5 kgf/mm², but lower than 6 kgf/mm²,
   - D:: Lower than 5 kgf/mm².
(5) Film impact (impact strength):
   As evaluation of the mechanical strength of each heat-shrinkable film sample, the film impacts of the sample before after heat shrinking were measured. Each test specimen of 100 mm x 100 mm was cut out of the films before and after heat shrinking to measure the film impact by means of a film impact tester manufactured by Toyo Seiki Seisakusho, Ltd. The diameter of an impact weight was 1 inch.
   Supposing that the film impact of the heat-shrinkable film specimen before heat shrinking is F₀, and the film impact after heat shrinking is F₁, the film impact retention after heat shrinking can be calculated in accordance with the equation, (F₁/F₀) x 100.
(6) Heat shrink property:
   A strip specimen having a length of 150 mm in a measuring direction and a width of 20 mm was cut out of each heat-shrinkable film sample, and 2 gage marks were placed on the specimen at an interval of 100 mm in the longitudinal direction. The specimen was then held in an oven controlled at an atmospheric temperature of [the glass transition temperature (Tg) of the alicyclic structure-containing polymer + 10°C] to heat shrink the specimen. Thereafter, the interval between the gage marks was measured and expressed as a numerical value as the value before heat shrinking was regarded as 100. The smaller value indicates that the heat shrinkability of the heat-shrinkable film is further excellent.
(7) Moisture resistance (water vapor transmission rate):
   A metal gauze bag in which 20 g of granular calcium chloride having an average particle diameter of 2 mm had been placed was closely packaged by heat sealing 2 heat-shrinkable film specimens prepared so as to each have an effective area of 15 cm x 15 cm. The thus-prepared packaged test bag was left to stand for a week under an atmosphere *of* a relative humidity of 90% and a temperature of 40°C to calculate out an increase in weight during it in terms of a value per unit time and unit area, and the value was regarded as a water vapor transmission rate (unit = g/m²·hr). The slighter increase in weight indicates the moisture resistance of the heat-shrinkable film is further excellent. This test was conducted on specimens before and after heat shrinking. The evaluated values were calculated out as average values of 5 runs.
   Supposing that the water vapor transmission rate of the heat-shrinkable film specimen before heat shrinking is T₀, and the water vapor transmission rate after heat shrinking is T₁, the rate of increase of water vapor transmission rate is represented by a ratio T₁/T₀.

### [Preparation Example 1]

After 1-hexene (0.55 parts), dibutyl ether (0.11 parts) and triisobutylaluminum (0.22 parts) were charged into a reactor containing dehydrated cyclohexane (500 parts) at room temperature in a nitrogen atmosphere, tricyclo[4.3.0.1^{2,5}]dec-3-ene (hereinafter abbreviated as DCP; 200 parts) and a 0.70% toluene solution (30 parts) of tungsten hexachloride were continuously added over 2 hours while holding the resultant mixture at 45°C to conduct ring-opening polymerization.

This polymerization reaction mixture thus obtained was transferred to a pressure reactor for hydrogenation, and a nickel catalyst (G-96D, product of Nissan Girdler Catalyst Co., Ltd.; rate of nickel supported: 58% by weight; 10 parts) supported on diatomaceous earth and cyclohexane (200 parts) were added to the polymerization reaction mixture to conduct a reaction at 150°C for 8 hours under a hydrogen pressure of 45 kgf/cm². This solution was filtered through a filter equipped with a stainless metal gauze using diatomaceous earth as a filter aid to remove the catalyst. The resultant reaction mixture was poured into isopropyl alcohol (3,000 parts) under stirring to precipitate a hydrogenated product formed. The hydrogenated product was collected by filtration, washed with acetone (500 parts) and then dried for 48 hours under at most 1 torr in a vacuum drier preset at 100°C to obtain a hydrogenated product (190 parts) of a ring-opening polymer.

The thus-obtained hydrogenated product (Polymer A₁) of the ring-opening polymer had a rate of hydrogenation of 99.9% at its main chain, a weight average molecular weight of 38,000, a glass transition temperature of 97°C and a melt flow rate of 21 g/10 min.

### [Preparation Example 2]

A hydrogenated product (190 parts) of a ring-opening polymer was obtained in the same manner as in Preparation Example 1 except that DCP (170 g) and bicyclo[2.2.1]hept-2-ene (hereinafter abbreviated as NB; 30 parts) were used in place of DCP (200 parts).

The thus-obtained hydrogenated product (Polymer A₂) of the ring-opening polymer had a rate of hydrogenation of 99.9% at its main chain, a weight average molecular weight of 37,000, a glass transition temperature of 80°C and a melt flow rate of 21 g/10 min.

### [Preparation Example 3]

A hydrogenated product (190 parts) of a ring-opening polymer was obtained in the same manner as in Preparation Example 2 except that 5-ethyl-bicyclo[2.2.1]hept-2-ene (hereinafter abbreviated as ENB; 30 parts) were used in place of NB (30 parts).

The thus-obtained hydrogenated product (Polymer A₃) of the ring-opening polymer had a rate of hydrogenation of 99.9% at its main chain, a weight average molecular weight of 37,500, a glass transition temperature of 81°C and a melt flow rate of 20 g/10 min.

### [Preparation Example 4]

A hydrogenated product (190 parts) of a ring-opening polymer was obtained in the same manner as in Preparation Example 1 except that 8-ethyl-tetracyclo[4.4.0.1^{2,5}.1^{7,10}]-dodec-3-ene (hereinafter abbreviated as ETCD; 130 parts) and NB (70 parts) were used in place of DCP (200 parts).

The thus-obtained hydrogenated product (Polymer A₄) of the ring-opening polymer had a rate of hydrogenation of 99.9% at its main chain, a weight average molecular weight of 39,000, a glass transition temperature of 85°C and a melt flow rate of 20 g/10 min.

### [Preparation Example 5]

A hydrogenated product (190 parts) of a ring-opening polymer was obtained in the same manner as in Preparation Example 4 except that ETCD (170 parts) and NB (30 parts) were used.

The thus-obtained hydrogenated product (Polymer A₅) of the ring-opening polymer had a rate of hydrogenation of 99.9% at its main chain, a weight average molecular weight of 39,500, a glass transition temperature of 118°C and a melt flow rate of 19 g/10 min.

### [Preparation Example 6]

A hydrogenated product (190 parts) of a ring-opening polymer was obtained in the same manner as in Preparation Example 4 except that ETCD (190 parts) and NB (10 parts) were used.

The thus-obtained hydrogenated product (Polymer C₁) of the ring-opening polymer had a rate of hydrogenation of 99.9% at its main chain, a weight average molecular weight of 38,500, a glass transition temperature of 133°C and a melt flow rate of 20 g/10 min.

### [Preparation Example 7]

A hydrogenated product (190 parts) of a ring-opening polymer was obtained in the same manner as in Preparation Example 4 except that ETCD (200 parts) was used.

The thus-obtained hydrogenated product (Polymer C₂) of the ring-opening polymer had a rate of hydrogenation of 99.9% at its main chain, a weight average molecular weight of 38,500, a glass transition temperature of 141°C and a melt flow rate of 20 g/10 min.

### [Preparation Example 8]

A polymerizer was continuously charged with a cyclohexane solution of tetracyclododecene (TCD) as monomer, and a cyclohexane solution of VO(O·C₂H₅)Cl₂ and a cyclohexane solution of ethylaluminum sesquichloride [Al(C₂H₅)_{1.5}Cl_{1.5}] as catalysts, respectively. At the same time, ethylene was fed to the polymerization system through a bubbling tube to conduct a polymerization reaction. A polymer solution of a copolymer formed by the polymerization reaction was continuously taken out of the upper part of the polymerizer. A mixture of cyclohexane/isopropyl alcohol (1:1) was added to the polymer solution taken out to terminate the polymerization reaction. Thereafter, an aqueous solution containing concentrated hydrochloric acid in a proportion of 5 liters per m³ of water was brought into contact with the polymer solution at a ratio of 1:1 under vigorous stirring, thereby transferring the remaining catalysts to an aqueous phase. After this contact mixture was left to rest, the aqueous phase was removed, and the residue was further washed twice with water, thereby purifying and isolating the polymerization reaction mixture.

This polymerization reaction mixture thus purified and isolated was brought into contact with acetone in an amount 3 times as much as the reaction mixture under vigorous stirring to deposit a copolymer formed. A solid portion (copolymer) was collected by filtration and fully washed with acetone. In order to extract unreacted monomers existing in the polymer, this solid portion was poured into acetone to give a concentration of 40 kg/m³ to conduct an extraction operation under conditions of 60°C and 2 hours. After the extraction operation, the solid portion was collected by filtration and dried for 12 hours at 130°C under 350 mmHg to obtain an ethylene·TCD copolymer.

The thus-obtained ethylene·TCD copolymer (Polymer C₃) had a composition of ethylene/TCD = 68/32 (mol%), a weight average molecular weight of 81,000 and a glass transition temperature of 80°C.

### [Preparation Example 9]

To a reactor charged with cyclohexane (258 liters) at normal temperature under a nitrogen atmosphere, was added NB and triisobutylaluminum. While stirring the mixture, ethylene was then introduced under normal pressure to make the interior of the system an ethylene atmosphere. Thereafter, the interior of the reactor was pressurized with ethylene, and a toluene solution containing isopropylidene(cyclopentadienyl)(indenyl)-zirconium chloride and methyl almoxane provided in advance was added into the system, thereby continuously conducting a copolymerization reaction of ethylene with NB. After 60 minutes, isopropyl alcohol was added to terminate the polymerization reaction. After reducing the pressure, a polymer solution was taken out of the reactor and treated in the same manner as in Preparation Example 8 to obtain a dry ethylene·NB copolymer.

The thus-obtained ethylene·NB copolymer (Polymer C₄) had a composition of ethylene/NB = 64/36 (mol%), a weight average molecular weight of 95,000 and a glass transition temperature of 81°C.

### [Example 1]

To the hydrogenated product (Polymer A₁; 100 parts) of the ring-opening polymer obtained in Preparation Example 1, was added Irganox 1010 (pentaerythritol tetrakis[3-(3,5-di-t-butyl-4-hydroxyphenyl)propionate]; product of CIBA-GEIGY AG; 0.2 parts) as an antioxidant, and the resultant mixture was kneaded and extruded by means of a twine-screw extruder (TEM-35B manufactured by Toshiba Machine Co., Ltd.; screw diameter: 37 mm; L/D = 32, screw revolution speed: 250 rpm; resin temperature: 240°C; feed rate: 10 kg/hr) to obtain pellets.

The thus-obtained pellets were extruded into a sheet having a thickness of 150 µm under forming conditions of a molten resin temperature of 220°C and a T-die width of 500 mm by means of a T-die type film melt extruder having a resin melt kneading machine equipped with a screw having a diameter of 65 mm. The thus-obtained sheet having the size of 500 mm x 1000 mm x 100 µm was biaxially stretched 2.5 times in a machine direction and 4.0 times in a transverse direction at an atmospheric temperature of 120°C to produce a heat-shrinkable film having a thickness of 15 µm.

As initial properties of the heat-shrinkable film thus obtained, the tensile strength, film impact and water vapor transmission rate were evaluated. Further, the heat shrink property, and the water vapor transmission rate and rate of increase thereof and the film impact and retention thereof after heat shrinking were determined. The results are shown in Tables 1 and 2.

### [Example 2]

A heat-shrinkable film was produced in the same manner as in Example 1 except that a styrene·ethylene· butylene·styrene block copolymer (SEBS; Toughtec H1051G, product of Asahi Chemical Industry Co., Ltd.; 20 parts) was added as a soft polymer to the hydrogenated product (Polymer A₁; 100 parts) of the ring-opening polymer upon the pelletizing, and evaluated. The results are shown in Tables 1 and 2.

### [Example 3]

A heat-shrinkable film was produced in the same manner as in Example 1 except that the hydrogenated product (Polymer A₂) of the ring-opening polymer obtained in Preparation Example 2 was used, and the atmospheric temperature upon the stretching was changed to 110°C, and evaluated. The results are shown in Tables 1 and 2.

### [Example 4]

A heat-shrinkable film was produced in the same manner as in Example 2 except that the hydrogenated product (Polymer A₂) of the ring-opening polymer obtained in Preparation Example 2 was used, and evaluated. The results are shown in Tables 1 and 2.

### [Example 5]

A heat-shrinkable film was produced in the same manner as in Example 1 except that the hydrogenated product (Polymer A₃) of the ring-opening polymer obtained in Preparation Example 3 was used, and evaluated. The results are shown in Tables 1 and 2.

### [Example 6]

A heat-shrinkable film was produced in the same manner as in Example 1 except that the hydrogenated product (Polymer A₄) of the ring-opening polymer obtained in Preparation Example 4 was used, and evaluated. The results are shown in Tables 1 and 2.

### [Example 7]

A heat-shrinkable film was produced in the same manner as in Example 1 except that the hydrogenated product (Polymer A₅) of the ring-opening polymer obtained in Preparation Example 5 was used, and the atmospheric temperature upon the stretching was changed to 125°C, and evaluated. The results are shown in Tables 1 and 2.

### [Example 8]

A heat-shrinkable film was produced in the same manner as in Example 2 except that the hydrogenated product (Polymer A₅) of the ring-opening polymer obtained in Preparation Example 5 was used, and the atmospheric temperature upon the stretching was changed to 125°C, and evaluated. The results are shown in Tables 1 and 2.

### [Example 9]

The pellets obtained in Preparation Example 1, and pellets prepared by adding the same compounding additive as that used in Example 1 in the same amount to polypropylene (crystallinity: 30%; melting point: 160°C) were used, and a 2-layer type and T-die type film melt extruder composed of 2 resin melt kneading machines each equipped with a screw having a diameter of 65 mm was used to separately feed the respective pellets to the resin melt kneading machines, thereby extruding the pellets into a sheet having a thickness of 150 µm under forming conditions of a molten resin temperature of 230°C and a T-die width of 500 mm. The thus-obtained sheet having the size of 500 mm x 1000 mm x 100 µm was biaxially stretched 2.5 times in a machine direction and 4.0 times in a transverse direction at an atmospheric temperature of 120°C to produce a heat-shrinkable film having a thickness of 15 µm (alicyclic structure-containing polymer layer: 10 µm/polypropylene layer: 5 µm). The results are shown in Tables 1 and 2.

### [Comparative Example 1]

A heat-shrinkable film was produced in the same manner as in Example 1 except that the hydrogenated product (Polymer C₁) of the ring-opening polymer obtained in Preparation Example 6 was used, and the atmospheric temperature upon the stretching was changed to 160°C, and evaluated. The results are shown in Tables 1 and 2.

### [Comparative Example 2]

A heat-shrinkable film was produced in the same manner as in Example 1 except that the hydrogenated product (Polymer C₂) of the ring-opening polymer obtained in Preparation Example 7 was used, and the atmospheric temperature upon the stretching was changed to 160°C, and evaluated. The results are shown in Tables 1 and 2.

### [Comparative Example 3]

A heat-shrinkable film was produced in the same manner as in Example 1 except that the ethylene·TCD copolymer (Polymer C₃) obtained in Preparation Example 8 was used, and the atmospheric temperature upon the stretching was changed to 110°C, and evaluated. The results are shown in Tables 1 and 2.

### [Comparative Example 4]

A heat-shrinkable film was produced in the same manner as in Example 1 except that the ethylene·NB copolymer (Polymer C₄) obtained in Preparation Example 9 was used, and the atmospheric temperature upon the stretching was changed to 110°C, and evaluated. The results are shown in Tables 1 and 2.

**Table 1**

| Thermoplastic resin material | | | | | | |
|---|---|---|---|---|---|---|
| | Alicyclic structure-containing polymer | | | | Anti-oxidant (Irganox #1010) | Soft polymer (SEBS) |
| | Kind | Proportion of repeating unit having no norbornane ring | Glass transition temp. | Weight average molecular weight | | |
| | | (wt.%) | (°C) | (Mw) | (parts) | (parts) |
| Ex. 1 | Polymer A₁ | 100 | 97 | 38,000 | 0.2 | - |
| Ex. 2 | Polymer A₁ | 100 | 97 | 38,000 | 0.2 | 20 |
| Ex. 3 | Polymer A₂ | 100 | 80 | 37,000 | 0.2 | - |
| Ex. 4 | Polymer A₂ | 100 | 80 | 37,000 | 0.2 | 20 |
| Ex. 5 | Polymer A₃ | 100 | 81 | 37,500 | 0.2 | - |
| Ex. 6 | Polymer A₄ | 35 | 85 | 39,000 | 0.2 | - |
| Ex. 7 | Polymer A₅ | 15 | 118 | 39,500 | 0.2 | - |
| Ex. 8 | Polymer A₅ | 15 | 118 | 39,500 | 0.2 | 20 |
| Ex. 9 | Polymer A₁ | 100 | 97 | 38,000 | 0.2 | - |
| Comp. Ex. 1 | Polymer C₁ | 5 | 133 | 38,500 | 0.2 | - |
| Comp. Ex. 2 | Polymer C₂ | 0 | 80 | 81,000 | 0.2 | - |
| Comp. Ex. 3 | Polymer C₃ | 0 | 81 | 95,000 | 0.2 | - |
| Comp. Ex. 4 | Polymer C₄ | 0 | 141 | 38,500 | 0.2 | - |

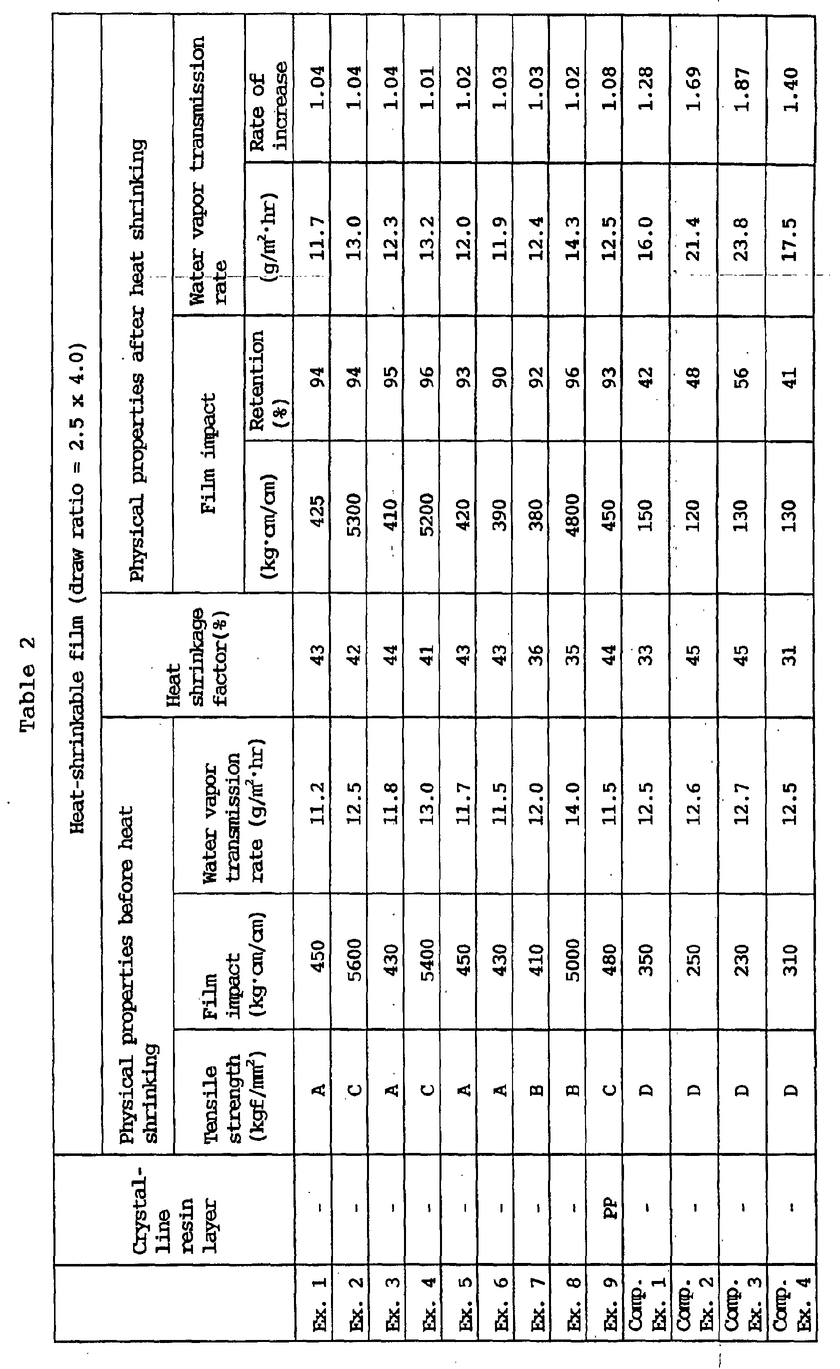

From the results described above, it was confirmed that the heat-shrinkable films according to the present invention are excellent in initial moisture resistance, tensile strength and film impact, and markedly small in deterioration of properties such as moisture resistance and film impact after heat shrinking compared with the heat-shrinkable film of Comparative Examples.

### INDUSTRIAL APPLICABILITY

According to the present invention, there are provided single-layer or multi-layer, heat-shrinkable films excellent in heat shrinkability, mechanical strength (tensile strength, film impact) and moisture resistance. The heat-shrinkable films according to the present invention are markedly prevented from being deteriorated in film impact and moisture resistance after heat shrinking. According to the present invention, there are also provided packages obtained by thermally shrink-wrapping a product to be packaged with the heat-shrinkable film having such excellent various properties.

The heat-shrinkable films according to the present invention are suitable for use as heat shrink packaging materials for storage and shipment of food, drug and miscellaneous goods, seal packaging materials for preventing caps, stoppers and the like from being opened, and heat-shrinkable label materials for bottles, containers and the like.

## Claims

1. A single-layer or multi-layer, heat-shrinkable film having a layer of a thermoplastic resin material comprising an alicyclic structure-containing polymer (A) having a repeating unit (a) consisting of an alicyclic structure, wherein a proportion of a repeating unit (b) of a ring structure having no norbornane ring structure in the repeating unit (a) is at least 10% by weight.

2. The heat-shrinkable film according to Claim 1, wherein the thermoplastic resin material layer is a layer of a resin composition comprising a soft polymer (B) in addition to the alicyclic-structure containing polymer (A).

3. The heat-shrinkable film according to Claim 1, which is a multi-layer, heat-shrinkable film further having at least one crystalline resin layer in addition to at least one layer of the thermoplastic resin material.

4. The heat-shrinkable film according to Claim 1, which is a film stretched at a draw ratio of at least 1.5 times in at least an uniaxial direction.

5. The heat-shrinkable film according to Claim 4, which is a film biaxially stretched at a draw ratio of 1.5 to 10 times in each of machine and transversal directions.

6. The heat-shrinkable film according to Claim 1, wherein the film impact retention after heat shrinking is at least 70%, and the rate of increase of water vapor transmission rate after heat shrinking is at most 1.20.

7. The heat-shrinkable film according to Claim 1, wherein the heat shrinkage factor when the film is held under a temperature atmosphere ranging from a temperature lower by 40°C than the glass transition temperature of the alicyclic structure-containing polymer (A) to a temperature higher by 80°C than the glass transition temperature [(Tg-40°C) to (Tg + 80°C)] is 3 to 70%.

8. The heat-shrinkable film according to Claim 1, which has a thickness of 1 to 100 µm.

9. The heat-shrinkable film according to Claim 1, wherein the alicyclic structure-containing polymer (A) has a weight average molecular weight of 5,000 to 500,000, a glass transition temperature of 50 to 300°C and a melt flow rate of 0.5 to 150 g/10 min as measured at a temperature of 280°C under a load of 2.16 kg in accordance with JIS K 6719.

10. The heat-shrinkable film according to Claim 1, wherein a proportion of the repeating unit (a) consisting of the alicyclic structure in the alicyclic structure-containing polymer (A) is at least 50% by weight.

11. The heat-shrinkable film according to Claim 1, wherein the alicyclic structure-containing polymer (A) is a thermoplastic norbornene resin.

12. The heat-shrinkable film according to Claim 11, wherein the thermoplastic norbornene resin is a hydrogenated product of a ring-opening (co)polymer of a norbornene monomer.

13. The heat-shrinkable film according to Claim 11, wherein the repeating unit (b) of the ring structure having no norbornane ring structure is a repeating unit derived from a ring-opening (co)polymer of at least one norbornene monomer selected from the group consisting of norbornenes, dicyclopentadienes, methanotetrahydrofluorenes and methanohexahydroanthracenes.

14. The heat-shrinkable film according to Claim 12, wherein the alicyclic structure-containing polymer (A) is a hydrogenated product of a ring-opening polymer of a dicyclopentadiene.

15. The heat-shrinkable film according to Claim 12, wherein the alicyclic structure-containing polymer (A) is a hydrogenated product of a ring-opening copolymer of a norbornene and a dicyclopentadiene

16. The heat-shrinkable film according to Claim 12, wherein the alicyclic structure-containing polymer (A) is a hydrogenated product of a ring-opening copolymer of a norbornene and a tetracyclododecene.

17. The heat-shrinkable film according to Claim 2, wherein the soft polymer (B) is a polymer having a glass transition temperature of at most 30°C.

18. The heat-shrinkable film according to Claim 3, wherein the crystalline resin is at least one polyolefin resin selected from the group consisting of polyethylene resins and polypropylene reins.

19. The heat-shrinkable film according to Claim 1, wherein the heat-shrinkable film is a multi-layer, heat-shrinkable film, and a proportion of the thickness of the layer of the thermoplastic resin material comprising the alicyclic structure-containing polymer (A) is 10 to 90% based on the total thickness of the film.

20. A package obtained by thermally shrink-wrapping a product to be packaged with the heat-shrinkable film according to any one of the Claims set forth above.
